(19) Europäisches Patentamt
European Patent Office
Office européen des brevets

(11) **EP 2 454 314 B1**

(12) **EUROPÄISCHE PATENTSCHRIFT**

(45) Veröffentlichungstag und Bekanntmachung des Hinweises auf die Patenterteilung:
**24.04.2013 Patentblatt 2013/17**

(51) Int Cl.:
***C08K 5/00*** *(2006.01)*     ***C08K 5/11*** *(2006.01)*
***B32B 17/10*** *(2006.01)*

(21) Anmeldenummer: **10732695.1**

(22) Anmeldetag: **09.07.2010**

(86) Internationale Anmeldenummer:
**PCT/EP2010/059930**

(87) Internationale Veröffentlichungsnummer:
**WO 2011/006849 (20.01.2011 Gazette 2011/03)**

(54) **WEICHMACHERHALTIGE FOLIEN AUS POLYVINYLACETAL MIT ADIPATDIALKYLESTERN ALS WEICHMACHER**

PLASTICISED SHEETS MADE OF POLYVINYL ACETAL HAVING ADIPIC ACID DIALKYL ESTERS AS PLASTICISERS

FEUILLES PLASTIFIEES EN POLY (ACETAL DE VINYL) CONTENANT COMME PLASTIFIANT DES ESTERS DE DIALKYLE D'ACIDE ADIPIQUE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **13.07.2009 DE 102009027657**

(43) Veröffentlichungstag der Anmeldung:
**23.05.2012 Patentblatt 2012/21**

(73) Patentinhaber: **Kuraray Europe GmbH**
**65795 Hattersheim (DE)**

(72) Erfinder: **KELLER, Uwe**
**53177 Bonn (DE)**

(56) Entgegenhaltungen:
**EP-A1- 0 067 022     EP-A1- 1 762 590**
**WO-A1-2004/108804**

**Beschreibung**

**Technisches Gebiet**

Die Erfindung betrifft eine als Zwischenschicht in Verbundsicherheitsgläsern geeignete weichmacherhaltige Folie auf der Basis von teilacetalisierten Polyvinylalkoholen unter Verwendung von Adipatdialkylestern als Weichmacher.

**Stand der Technik**

Verbundsicherheitsgläser bestehen im Allgemeinen aus zwei Glasscheiben und einer die Glasscheiben verbindenden Zwischenfolie. Als Folienmaterial wird überwiegend weichmacher-haltiger teilacetalisierter Poly-vinyl-alkohol (Polyvinylacetal), insbesondere Polyvinylbutyral (PVB) verwendet. Verbundsicherheitsgläser (VSG) werden beispielsweise als Windschutzscheiben oder Seitenverglasungen im Kraftfahrzeugbereich sowie als Sicherheitsverglasung im Baubereich eingesetzt.

Als Weichmacher für solche PVB-Folien sind mittlerweile aliphatische Diester des Tri- bzw. Tetraethylenglykols etabliert. Besonders häufig werden als Weichmacher 3G7, 3G8 oder 4G7 eingesetzt, worin die erste Ziffer die Anzahl der Ethylenglycoleinheiten und die letzte Ziffer die Anzahl der Kohlenstoffatome im Carbonsäureteil der Verbindung bezeichnet. So steht 3G8 für Triethylenglykol-bis-(2-ethylhexanoat), d.h. für eine Verbindung der Formel $C_4H_9CH(CH_2CH_3)CO(OCH_2CH_2)_3O_2CCH(CH_2\ CH_3)C_4H_9$.

Als Weichmacher für teilacetalisierte Poly-vinyl-alkohole werden bevorzugt Verbindungen eingesetzt, die in einer VSG-Zwischen-schichtfolie für hohe Transparenz, niedrige Feuchtigkeits-aufnahme, gute Haftung zum Glas und eine ausreichende Kälteflexibilität der Folie sorgen. Weiterhin müssen diese Verbindungen eine ausreichende Kompatibilität mit dem teilacetalisierten Poly-vinyl-alkohol aufweisen, d.h. in einer ausreichenden Menge ohne auszuschwitzen mit diesem mischbar sein.

Allgemein sinkt die Verträglichkeit/Kompatibilität von Weichmacher und teilacetalisiertem Poly-vinyl-alkohol mit der Abnahme des polaren Charakters des Weichmachers. So sind Weichmacher höherer Polarität mit Polyvinylacetal besser verträglich als solche mit niedrigerer Polarität. Alternativ steigt die Verträglichkeit von Weichmachern geringer Polarität mit Zunahme des Acetalysierungsgrades, d.h. mit Abnahme der Anzahl an Hydroxygruppen und damit der Polarität des Polyvinylacetals.

In EP 0877 665 B1 wird das wenig polare 3G8 als Weichmacher für PVB-Folien empfohlen, weil es dem Folienprodukt eine verbesserte Feuchteresistenz verleiht. Da Feuchtigkeit die Haftung zwischen Klebefolie und Glas dauerhaft schädigen kann und im Extremfall zu sichtbaren Ablösungen der Folie vom Glas führt, wird bei der Herstellung von Verbundsicherheitsglas (VSG) mit PVB-Folie eine möglichst hohe Feuchteresistenz der Folie angestrebt.

Es ist aus EP 0 877 665 B1 bekannt, dass mit 3G8 nicht ohne weiteres PVB-Typen weichgemacht werden können, die einen Polyvinylalkoholgehalt größer 19,5 Gew.-% aufweisen, da dann ein Ausschwitzen des Weichmachers zu erwarten ist. Wie bei anderen weichmacherhaltigen Kunststoff-produkten ist das Ausschwitzen von Weichmachers auch bei Zwischenschichtfolien für VSG unerwünscht, da eine Abgabe des Weichmachers unter anderem entlang der freiliegenden Kante des PVB am Rand des Verbundes zu vorzeitiger Delamination führen kann. Auf Grund der geringen Verträglichkeit bzw. der Neigung von 3G8 zum Ausschwitzen ist in EP 0877 665 B1 der Einsatz von 3G8 auf PVB-Typen mit einem Polyvinylalkoholgehalt von 17 - 19,5 Gew.-% limitiert.

Es ist auch bekannt, dass andere unpolare Weichmacher wie z.B. Dialkyladipate, Dialkylsebazate, oder Phthalatweichmacher wie Dioctylphthalat oder Di-isononylphthalat, mit PVB wenig verträglich sind, sofern ein nicht geeignetes PVB verwendet wird. Bei mangelnder Verträglichkeit beobachtet man das Ausschwitzen des Weichmachers, insbesondere bei Lagerung in feuchter und/oder kalter Umgebung. Beide Umgebungsbedingungen kommen bei der Verwendung von PVB-Folie in der Praxis vor und sind somit für eine Bewertung der Weichmacherverträglichkeit relevant.

Zusätzlich besitzen Weichmacher geringer Polarität im Vergleich zu stärker polaren Weichmachern wie etwa 3G7 in Kombination mit einem gegebenen PVB die Eigenschaft, zu einer reduzierten Kälteflexibilität der PVB-Folie zu führen. Dies kommt insbesondere zum Tragen, wenn der Weichmachergehalt weniger als 25 Gew.-% beträgt und/oder wenn das verwendete Polyvinylbutyral einen geringen Acetalysierungsgrad und damit einen hohen Restgehalt an Polyvinylalkoholgruppen aufweist. Ist der Acetalysierungsgrad zu gering, resultiert eine erhöhte Erweichungstemperatur (Tg) des PVB, was sich dann negativ auf die Kälteflexibilität der damit hergestellten weichmacherhaltigen Folie auswirkt.

So wird in DE 101 16812 A1 wird die Verwendung von Derivaten von Cyclohexanpolycarbonsäureestern zur Weichmachung von PVB mit einer entsprechend eingestellten Erweichungstemperatur vorgeschlagen.

US 5013779 offenbart ein Gemisch aus einem C4 bis C9 Diadipatester mit cyclischen $C_4$-$C_6$-Diadipatestern wie z.B. Dihexyladipat und Di-Cyclohexyladipat als Weichmacher für PVB mit einem Polyvinylalkoholanteil von 15 bis 25 Gew.%. Durch die Di-Cyclohexyladipate wird die geringe Verträglichkeit der acylischen Adiapate ausgeglichen.

Zusammengefasst treten bei der Verwendung von PVB mit einer Erweichungstemperatur von über 80 °C bei höheren Weichmachanteilen Unverträglichkeiten auf. Reduziert man den Weichmacheranteil, so resultiert eine geringere Kälteflexibilität der Folie.

Diese Effekte werden durch eine einfache Erhöhung des Acetalisierungsgrades des verwendeten PVB nicht automatisch verbessert. Zwar kann bei ausreichend hohem Acetalisierungsgrad des PVB eine ausreichende Verträglichkeit mit wenig polaren Weichmachern, wie z.B. Phthalaten oder kernhydrierten Phthalaten (DINCH) eingestellt werden. Es treten dann aber unter Umständen neue Probleme auf: Die Kriechneigung einer solchen Folie bei erhöhter Temperatur wird möglicherweise zu groß. Weiterhin verschlechtert sich die Penetrationsfestigkeit bei erhöhten Temperaturen, z.B. oberhalb von 40 °C, was bewirkt, dass Insassen eines Fahrzeuges bei einem Unfall im Sommer nicht ausreichend vor Verletzung geschützt sind. Zugleich ist die Kälteflexibilität nicht automatisch ausreichend gut, da diese stark von der Art der verwendeten Weichmacher abhängt. Insbesondere die wenig flüchtigen und unpolaren Esterweichmacher mit Molekulargewichten oberhalb 360 g/mol, wie zum Beispiel Diisononylphthalat DINP, Diisodecylphthalat DIDP, oder kernhydriertes DINP (DINCH) bewirken unter Umständen keine ausreichende Flexibilität bei tiefen Temperaturen, so dass die Folie bereits bei -20°C spröde bricht anstatt elastisch nachzugeben. In diesem Fall wären beispielsweise die Insassen eines Fahrzeuges bei einem Unfall im Winter einem erhöhtem Verletzungsrisiko ausgesetzt.

Diisononyladipat (DINA) ist als unpolarer Weichmacher für PVB z.B. aus DE 101 08 315, DE 103 37 701, WO 02/077081, EP 0938519, EP 10 84188, DE 10 2004 000023, DE 10 2004 060 042, EP 1618145 und US 3,841,890 bekannt, wurde aber in industriellem Maßstab bisher weder alleine noch in Mischung mit anderen Weichmachern für PVB eingesetzt. Dies liegt insbesondere an der mangelnden Verträglichkeit zu PVB mit den bislang üblichen Polyvinylalkoholgehalten von 17 - 19,5 Gew.-%.

Andererseits ist DINA in großen Mengen kommerziell verfügbar, verleiht damit weichgemachten Kunststoffen eine gute Kälteflexibilität und sollte auf Grund des unpolaren Charakters als Weichmacher für unpolare PVB-Typen geeignet sein.

Aus kommerziellen Gründen wäre es erwünscht, Dialkylester der Adipinsäure als Weichmacher für PVB einsetzen zu können.

Aufgabe der vorliegenden Erfindung war es daher, Mischungen von PVB mit DINA, ggf. mit weiteren Weichmachern zu finden, die eine ausreichende Kälteflexibilität, gute Kompatibilität der Komponenten und geringe Feuchteaufnahme aufweisen.

## Darstellung der Erfindung

Es wurde gefunden, dass Folien enthaltend Polyvinylbutyral mit niedriger Erweichungstemperatur (Tg) die mit Dialkylestern der Adipinsäure weich gestellt werden, eine verringerte Feuchteaufnahme gegenüber Folien mit 3G8 als Weichmacher aufweisen. PVB-Folien enthaltend Adipatdialkylester besitzen eine gute Weichmacherverträglichkeit, gute Kälteflexibilität und gute mechanische Festigkeiten, welche damit hergestelltem VSG eine gute Penetrationsfestigkeit verleiht.

Gegenstand der vorliegenden Erfindung ist daher eine weichmacherhaltige Folie, enthaltend 60 bis 90 % Polyvinylacetal mit einem Polyvinylalkoholanteil von 12 bis 18 Gew.% und 2 bis 40 Gew.% einer oder mehrerer Adipatdialkylester der allgemeinen Formel $R_1CO_2(CH_2)_4CO_2R_2$ wobei $R_1$ und $R_2$ jeweils für einen gleichen oder unterschiedlichen Alkylrest mit 9 - 23 Kohlenstoffatomen stehen, als Weichmacher.

Als Esteralkohole der erfindungsgemäß verwendeten Adipatdialkylester werden insbesondere solche mit 9 bis 17 Kohlenstoffatomen und besonders bevorzugt solche mit 9, 13 oder 17 Kohlenstoffatomen eingesetzt (sog. Oxoalkohole). Diese Alkohole können verzweigt oder unverzweigt sein, werden aber aufgrund der Herstellung in verschiedenen Isomerengemischen angeboten. Dementsprechend stellen auch die hieraus hergestellten Adipatdialkylester Isomerengemische dar.

Bevorzugt wird im Rahmen der vorliegenden Erfindung Diisononyladipat (DINA) als Adipatdialkylester und Polyvinylbutyral (PVB) als Polyvinylacetal verwendet. Die folgenden Ausführungen für DINA oder PVB gelten sinngemäß für alle erfindungsgemäß einsetzbaren Adipatdialkylester bzw. Polyvinylacetale.

Die erfindungsgemäß verwendeten Adipatdialkylester können in Kombination mit mindestens einem weiteren, auch als Zusatzweichmacher bezeichneten Weichmacher eingesetzt werden. Bevorzugt enthalten die erfindungsgemäßen weichmacherhaltigen Folien neben den Adipatdialkylestern zusätzlich 1 bis 40 Gew.% mindestens eines weiteren Weichmacher.

Bevorzugt weisen die Folien einen Gesamtweichmachergehalt d.h. der Anteil aller Weichmacher in der Folie im Bereich von 10 - 40 Gew.%, 14 - 36 Gew.%, 16 - 34 Gew.%, 18 - 30 Gew.%, 22 - 28 Gew.%, insbesondere 24 - 27 Gew.% (jeweils bezogen auf die gesamte Folienmischung) auf. Der Anteil der Adipatdialkylester kann in dieser Mischung über 10%, über 20%, über 30%, über 40%, über 50%, über 60%, über 70%, über 80%, oder über 90% liegen.

Grundsätzlich können die Folien Weichmachermischungen von Adipatdialkylester mit mindestens einem der folgenden, für PVB-Folie bekannten Weichmacher enthalten:

- Ester von mehrwertigen aliphatischen oder aromatischen Säuren, z.B. Ester der Adipinsäure mit cycloaliphatischen oder Etherbindungen enthaltenden Esteralkoholen, Dialkylsebazate wie Dibutylsebazat sowie Ester der Sebazinsäure mit cycloaliphatischen oder Etherbindungen enthaltenden Esteralkoholen, Estern der Phthalsäure oder Terephthalsäure wie Diisononylphthalat DINP, Dioctylphthalat DOP, Di-2-ethylhexylterephthalat DEHT oder Bis-2-butoxyethylphthalat.

- Ester oder Ether von mehrwertigen aliphatischen oder aromatischen Alkoholen oder Oligoetherglykolen mit einem oder mehreren unverzweigten oder verzweigten aliphatischen oder aromatischen Substituenten, wie z.B. Estern von Di-, Tri-, Tetra- oder Oligoglykolen mit linearen oder verzweigten ali-phatischen oder cycloaliphatischen Carbonsäuren; Als Beispiele für letztere Gruppe können dienen Diethylenglykol-bis-(2-ethyl-hexanoat), Triethylenglykolbis-(2-ethyl-hexanoat), Tri-ethylen-glykol-bis-(2-ethylbu-ta-no-at), Tetra-ethylen-glykol-bis-n-heptanoat, Triethylengly-kol-bis-n-heptanoat, Triethylenglykol-bis-n-hexanoat, Tetraethylen-glykol-dimethyl-ether und/oder Dipropylenglykolbenzoat, Ester des Glycerins wie z.b. Tris-2-ethylhexylglycerat.

Zur Gruppe geeigneter Zusatzweichmacher mit hoher Polarität zählen zum Beispiel Di-(2-butoxyethyl)-adipat (DBEA), Di-(2-butoxyethyl)-sebacat (DBES), Di-(2-butoxyethyl)-azelat, Di-(2-butoxyethyl)-glutarat. Di-(2-butoxyethoxyethyl)-adipat (DBEEA), Di-(2-butoxy-ethoxyethyl)-sebacat (DBEES), Di-(2-butoxyethoxyethyl)-azelat, Di-(2-butoxyethoxyethyl)-glutarat, Di-(2-hexoxyethyl)-adipat, Di-(2-hexoxyethyl)-sebacat, Di-(2-hexoxyethyl)-azelat, Di-(2-hexoxyethyl)-glutarat, Di-(2-hexoxyethoxyethyl)-adipat, Di-(2-hexoxyethoxyethyl)-sebacat, Di-(2-hexoxyethoxyethyl)-azelat, Di-(2-hexoxyethoxyethyl)-glutarat, Di-(2-butoxyethyl)-phthalat und/oder Di-(2-butoxyethoxyethyl)-phthalat.

Im Fall von Weichmachermischungen aus Adipatdialkylestern der o.g. allgemeinen Formel und kernhydrierten Alkylphthalaten oder Alkylterephthalatestern lassen sich Stiffness und Schlagzugzähigkeit der Folien gleichzeitig in den jeweils optimalen Bereich bringen, wenn weder der Anteil des Adipatdialkylester, noch der Anteil von kernhydriertem Phthalat /Terephthalat an der Weichmachermischung weniger als 10% beträgt, d.h. ein Masseverhältnis von Adipatdialkylester und kernhydrierte Alkylphthahalat und/oder kernhydrierte Alkylterephthalat als weiterer Weichmacher von 10:90 bis 90:10 eingestellt wird. Als kernhydriertes Alkylphthahalat und/oder Alkylterephthalat können z.B. $C_4$ bis $C_{25}$-Alkyldiester, bevorzugt $C_9$ bis $C_{13}$-Alkyldiester der Cyclohexan-1,2-dicarbonsäure bzw. Cyclohexan-1,4-dicarbonsäure eingesetzt werden.

Bevorzugt enthalten die erfindungsgemäßen Folien ein Weichmachergemisch von Adipatdialkylester und kernhydrierten Alkylphthalaten und/oder kernhydrierten Alkylterephthalaten im Masseverhältnis 20:80, - 80:20, besonders bevorzugt 30:70 - 70:30 und insbesondere 40:60 - 60:40 oder 50:50. Besonders bevorzugt werden als Adipatdialkylester DINA und als kernhydrierte Phthalate Di-isononyl-1,2-cyclohexancarbonsäureester (DINCH) in den genannten Masseverhältnissen verwendet.

Um die Feuchteresistenz der Folien nicht unnötig durch Verwendung eines zu polaren Weichmachers in der Mischung zu verschlechtern, können insbesondere Weichmacher geringer Polarität mit dem erfindungsgemäß verwendeten Dialkyladipaten kombiniert werden. Als Weichmacher geringer Polarität gelten Weichmacher mit einer gemäß der Formel 100 x (Anzahl O-Atome)/(Anzahl C-Atome + Anzahl H-Atome) berechneten Polarität von kleiner/gleich 9,4. Als Weichmacher geringer Polarität werden bevorzugt Dialkylsebacate mit einem Alkylrest mit mehr als 3 Kohlenstoffatomen, Dialkylester der 1,2-Cyclohexansäure mit einem Alkylrest mit mehr als 3 Kohlenstoffatomen und Oligoglycolsäureester mit einem Carbonsäurerest mit mehr als 7 Kohlenstoffatomen verwendet. Insbesondere geeignet sind die folgenden Verbindungen:

## Name Abkürzung 100 x O/(C+H)

Di-2-ethylhexylsebacat (DOS) 5,3
Di-isononyl-1,2-cyclohexancarbonsäureester (DINCH) 5,4
Di-2-ethylhexyladipat (DOA) 6,3
Di-2-ethylhexylphthalat (DOP) 6,5
Dihexyladipat (DHA) 7,7
Dibutylsebacat (DBS) 7,7
Triethylenglykol-bis-2-propylhexanoat 8,6
Triethylenglykol-bis-i-nonanoat 8,6
Di-2-butoxyethylsebacat (DBES) 9,4
Triethylenglykol-bis-2-ethylhexanoat (3G8) 9,4

Als Weichmacher geringer Polarität besonders bevorzugt sind kernhydrierte Phthalatweichmacher, insbesondere DINCH.

Zusätzlich können erfindungsgemäße Folien weitere, dem Fachmann bekannte Zusätze enthalten wie Restmengen an Wasser, UV-Absorber, Antioxidantien, Haftungsregulatoren, optische Aufheller, Stabilisatoren, Farbmittel, Verarbeitungshilfs-mittel, organische oder anorganische Nanopartikel, pyrogene Kieselsäure, Antiblockmittel und/oder oberflächen-aktive Stoffe.

Da durch die geringe Polarität der erfindungsgemäßen Folien deren elektrostatische Aufladung erhöht ist und dies bei der Verarbeitung zu Verbundsicherheitsglas unerwünschte Kontamination verursachen kann, kommt insbesondere der Einsatz von Antistatika in Betracht. Beispielsweise können als Antistatika nichtionische Tenside in Mengen bis zu 1Gew.% in der Folie enthalten sein. Geeignete Tenside sind z.B. in WO 02/102591 beschrieben. Weitere geeignete Antistatika sind Fettsäureester, ethoxylierte Alkylamine, Alkylphosphate. Eine Auswahl geeigneter Produktklassen kann Kapitel 10 aus "Plastics Additives Handbook", 5th Edition, Hanser Verlag, Herausgeber Hans Zweifel, entnommen werden. Grundsätzlich am besten geeignet sind jene Produkte, welche die Haftungseigenschaften und die Trübung der PVB-Folie nicht in unerwünschter Weise beeinflussen.

Unter Verwendung der genannten Weichmacher bzw. Weichmacherkombinationen ist es möglich, Folien mit besonders geringer Weichmacherabgabe herzustellen, was bei der Weiterverarbeitung den Vorteil reduzierter Geruchsbelästigung bzw. Auftrittswahrscheinlichkeit von Weichmacheraerosolen mit sich bringt und im fertigen VSG den Vorteil erhöhter Kantenstabilität und Resistenz gegenüber Delamination bietet.

Bevorzugt beträgt die Weichmacherabgabe der erfindungsgemäßen Folien (wie im folgenden definiert) weniger als 4 Gew.%, bevorzugt 3 Gew.%, besonders bevorzugt weniger als 2 Gew.% und am meisten bevorzugt weniger als 1 Gew.%, jeweils bezogen auf die Gesamtfolie. Die Weichmacherabgabe wird neben der Flüchtigkeit der Weichmacher selber durch den Weichmachergehalt und das Bindervermögen des Polyvinylacetals zu den Weichmachern beeinflusst. Erfindungsgemäße Folien basierend auf den weiter untern beschriebenen Polyvinylacetalen weisen aufgrund derer hohen Affinität zu Adipatdialkylester eine besonders geringe Weichmacherabgabe auf.

Bevorzugt wird als teilacetalisierter Polyvinylacetal ein teilacetalisierter bzw. teilbutyralisierter Polyvinylalkohol (Polyvinylbutyral) mit einem Polyvinylacetalgehalt (Acetalisierungsgrad) von gleich oder mehr als 81 Gew.-%, bevorzugt 82, besonders bevorzugt 83, insbesondere 84 Gew.-% eingesetzt, da diese Polyvinylacetale ausreichend niedrige Erweichungstemperaturen und Polaritäten aufweisen und mit Adipatdialkylester verträgliche Formulierungen mit guter Kälteflexibilität ergeben. Ein Acetalisierungsgrad von 87 Gew.-% sollte jedoch nicht überschritten werden, da dann die Verträglichkeit für den Weichmacher in der Regel nicht mehr ausreichend sind.

Polyvinylacetale enthalten neben den Acetaleinheiten noch aus Vinylacetat und Vinylalkohol resultierende Einheiten. In der Regel liegt der Polyvinylalkohol-Gehalt der eingesetzten Polyvinylacetale zwischen 12 und 18 %, bevorzugt zwischen 13 und 16 % und am meisten bevorzugt zwischen 13 und 15 %.

Der Restacetatgehalt der erfindungsgemäß verwendeten Polyvinylacetale liegt in der Regel bei weniger als 5 Gew.-%, bevorzugt weniger als 3 Gew.-%, besonders bevorzugt bei weniger als 2 Gew.-% und insbesondere bei weniger als 1,5 Gew.-% oder 1 Gew.%.

Die Summe von Acetalysierungsgrad und Restacetatgehalt kann als der zu Hundert fehlende Teil aus dem gemäß ASTM D 1396 bestimmten Polyvinylalkoholgehalt, d.h. den Anteil an freien Hydroxylgruppen des Polyvinylacetals berechnet werden. Der Acetalysierungsgrad kann auch durch hochauflösende NMR-Spektroskopie direkt bestimmt werden.

Damit die erfindungsgemäßen Folien eine ausreichende Kälteflexibilität bei einer gleichzeitig auch ausreichenden mechanischen Festigkeit bei erhöhter Temperatur besitzen, weisen die die für die Erfindung verwendbaren Polyvinylacetale grundsätzlich Erweichungstemperaturen (Tg) kleiner/gleich 74°C, bevorzugt im Bereich 64 - 74 °C, bevorzugt 65 - 73°C, besonders bevorzugt 66 - 72 °C und insbesondere im Bereich 67 - 71 °C auf.

Die Kälteflexibilität der erfindungsgemäßen Folien kann über die Kältebruchtemperaturprüfung nach DIN EN 1876-2 (1998) ermittelt werden. Durch geeignete Kombination eines PVB mit geringer Erweichungstemperatur und einem ausreichendem Anteil an erfindungsgemäßen die Kälteflexibilität verbessernden Dialkyladipaten wird die Kältebruchtemperatur der Folie auf kleiner-25°C, bevorzugt kleiner - 30 °C, stärker bevorzugt kleiner - 35°C und am meisten bevorzugt kleiner - 40 °C eingestellt.

Da die erfindungsgemäß verwendeten Adipatdialkylester einen stark weichmachenden Effekt haben, kann die Weichheit einer hiermit hergestellten Folie bei Verarbeitungstemperatur bereits zu hoch sein, was sich darin äußert, dass noch nicht zugeschnittene Folienränder, welche zwischen dem unteren und dem aufgelegtem Glas hinausragen, unter ihrem Eigengewicht schlaff nach unten hängen, was ein automatisiertes Besäumen mit einer Klinge in der Praxis erschwert. Folien geringer Stärke, d.h. mit Dicken im Bereich von 0.38 bis 0.76 mm, sollten deshalb bei 23 °C eine ausreichende Steifigkeit aufweisen. Es wurde gefunden, dass sich durch Beimischen eines Weichmachers geringer Polarität und geringerer weichmachender Wirkung als die erfindungsgemäß verwendeten Adipatdialkylester, die Foliensteifigkeit auf einfache Weise erhöhen lässt, ohne eine Absenkung des Weichmachergehaltes und ohne zu starke Beeinträchtigung der Kälteflexibilität. Beispiele für solche Weichmacher sind Di-2-ethylhexylterephthalat DEHT, DINP, DOP, DINCH, Triethylenglykol-bis-2-propylheptanoat, Triethylenglykol-bis-isononanoat.

Erfindungsgemäße Folien weisen in Stärke 0.76 bei 20 °C vorzugsweise eine Foliensteifigkeit (Stiffness gemäß ASTM D1388 bei 20 °C) im Bereich von 30 - 100 mm, bevorzugt 40 - 80 mm und besonders bevorzugt im Bereich von 50 - 70 mm auf.

Andererseits darf die Elastizität der Folie unter dynamischer Beanspruchung nicht zu gering sein, da ansonsten die Penetrationsfestigkeit nicht ausreichend hoch ist. Zur Überprüfung der Folienzähigkeit unter schlagartiger Zugbeanspruchung wird die Schlagzugzähigkeit (wie im folgenden definiert) bei 23 °C bestimmt. Weichmachergehalt und Zusammensetzung werden vorzugsweise so gewählt, dass eine Schlagzugzähigkeit im Bereich von 1300 - 2200 kJ/m2, besser 1400 - 2100 kJ/m2, bevorzugt 1500 - 1900 kJ/m2 und am meisten bevorzugt im Bereich von 1600 - 1800 kJ/m2 resultiert.

Weiterhin ist die Fließfähigkeit der Folien bei erhöhter Temperatur von Bedeutung. Diese sollte einerseits für die Verarbeitbarkeit der Folien ausreichend groß sein, damit die Folie ggf Unregelmäßigkeiten im Glasverbund einschließen oder umfließen kann. Andererseits darf die Fließfähigkeit der Folien bei erhöhter Temperatur nicht zu groß sein, da die Folie sonst bei ungünstigen Witterungsbedingungen nicht mehr ausreichende Klebekräfte besizt was zum Abgleiten der Glasscheiben in einem Laminat führen kann. Bevorzugt weisen erfindungsgemäße Folien daher einen Schmelzindex MFR 100 (10 min/21,6 kg) von weniger als 350 mg/10 min, besonders bevorzugt von weniger als 250 mg/10 min und insbesondere von weniger als 200 mg/10 min auf.

Zur Herstellung von Polyvinylacetal wird Polyvinylalkohol in Wasser gelöst und mit einem Aldehyd wie Butyraldehyd unter Zusatz eines Säurekatalysators acetalisiert. Das ausgefallene Polyvinylacetals wird abgetrennt, neutral gewaschen, ggf. in einem alkalisch eingestellten wässrigen Medium suspendiert, danach erneut neutral gewaschen und getrocknet.

Der Polyvinylalkoholgehalt des Polyvinylacetals kann durch die Menge des bei der Acetalisierung eingesetzten Aldehyds eingestellt werden. Es ist auch möglich, die Acetalisierung mit anderen oder mehreren Aldehyden mit 2-10 Kohlenstoffatomen (z.B. Valeraldehyd) durchzuführen.

Die auf weichmacherhaltigem Polyvinylacetal basierenden Folien enthalten bevorzugt unvernetztes Polyvinylbutyral (PVB), das durch Acetalisierung von Polyvinylalkohol mit Butyraldehyd gewonnen wird.

Der Einsatz von vernetzten Polyvinylacetalen, insbesondere vernetztem Polyvinylbutyral (PVB) ist ebenso möglich. Geeignete vernetzte Polyvinylacetale sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale) und WO 03/020776 A1 (mit Glyoxylsäure vernetzte Polyvinylacetale) beschrieben. Auf die Offenbarung dieser Patentanmeldungen wird vollumfänglich Bezug genommen.

Als Polyvinylalkohol können im Rahmen der vorliegenden Erfindung auch Terpolymere aus hydrolysierten Vinylacetat/Ethylen-Copolymeren eingesetzt werden. Diese Verbindungen sind in der Regel zu mehr als 98 Mol% hydrolysiert und enthalten 1 bis 10 Gew. auf Ethylen basierende Einheiten (z.B. Typ "Exceval" der Kuraray Europe GmbH).

Als Polyvinylalkohol können im Rahmen der vorliegenden Erfindung weiterhin auch hydrolysierte Copolymere aus Vinylacetat und mindestens einem weiteren ethylenisch ungesättigten Monomer eingesetzt werden.

Die Polyvinylalkohole können im Rahmen der vorliegenden Erfindung rein oder als Mischung von Polyvinylalkoholen mit unterschiedlichem Polymerisationsgrad oder Hydrolysegrad eingesetzt werden.

Die prinzipielle Herstellung und Zusammensetzung von Folien auf Basis von Polyvinylacetalen ist z. B. in EP 185 863 B1, EP 1 118 258 B1 WO 02/102591 A1, EP 1 118 258 B1 oder EP 387 148 B1 beschrieben. Gewerbliche Anwendbarkeit

Die erfindungsgemäßen Folien können insbesondere zur Herstellung von Verbundsicherheitsgläsern durch Laminieren mit einer oder mehreren Glasscheiben in dem Fachmann bekannter Weise verwendet werden. Die Verbundsicherheitsgläser können im Automobilbereich z.B. als Windschutzscheibe, als auch im Architekturbereich als transparente Bauteile oder im Möbelbau verwendet werden. Eine weitere Verwendung der erfindungsgemäßen Folien besteht in der Herstellung von Photovoltaikmodulen. Aufgrund der geringen Feuchteaufnahme und Weichmacherabgabe der erfindungsgemäßen Folien sind diese auch zur Herstellung von Glas/Folie/Kunststoff-Laminaten, wie etwa zur dauerhaften Verklebung einer Glasscheibe mit einer PET-Schicht gut geeignet. Auch das Verkleben zweier Kunststoffscheiben, etwa aus Polycarbonat oder PMMA ist mit den erfindungsgemäßen Folien durchführbar.

Messmethoden

Ausschwitztest bei hoher Feuchte:

Zur Bestimmung des Ausschwitzverhaltens einer PVB-Folie wird ein Teststreifen in einer mit Wasserdampf gesättigten Atmosphäre für 30 Tage gelagert. Durch die Aufnahme von Wasser und der damit einher gehenden Zunahme der Polarität, lässt sich bei wenig verträglichen Systemen der Weichmacher verdrängen, so dass dieser mit der Zeit an der Oberfläche der Folie als gut sichtbarer Film oder in Tropfenform austritt. Bei verträglichen Formulierungen kann an Teststreifen nach 30 Tagen kein Weichmacheraustritt festgestellt werden, wogegen dies bei unverträglichen Formulierungen häufig schon nach 24 h der Fall ist. Zur Einstellung einer Atmosphäre mit hoher relativer Luftfeuchtigkeit (rF) wird in einem geschlossenen Gefäß, wie z.B. einem Glasexsiccator, eine gesättigte wässrige Lösung aus Kupfersulfatpentahydrat mit einem Bodensatz hergestellt. Über dieser Lösung stellt sich bei 23 °C eine Gleichgewichtsfeuchte von ca. 98 % rF ein.

Ausschwitztest in kalter Umgebung:

Zur Bestimmung des Ausschwitzverhaltens einer PVB-Folie wird ein Folienabschnitt der Abmessung 30 x 10 cm zunächst während 24 h in einem Klima von 23 °C / 23 rF konditioniert und anschließend zu einer Rolle aufgewickelt in einen wasserdampfdichten Alu-PE Beutel eingeschweißt 1 Woche lang bei einer Temperatur von 5 °C gelagert. Nach Ablauf der Woche wird die Folie entnommen und auf ausgetreten Weichmacher hin untersucht. Für die Herstellung von weichgemachten PVB-Folien zur Überprüfung ihres Ausschwitzverhaltens kann die Folienmasse z.B. auf einem Walzenstuhl oder durch Extrusion homogenisiert werden.

Weichmacherabgabe

Die Weichmacherabgabe aus der PVB-Folie wird experimentell unter Bedingungen ermittelt, welche an eine Prozessführung im Vakuumlaminator, wie er zur Herstellung von Photovoltaikmodulen verwendet wird, angelehnt sind. Hierzu wird aus einer 0.76 mm dicken Folie / Muster eine Ronde in mit einem Durchmesser von 60 mm ausgeschnitten bzw. hergestellt und flach auf den Boden in eine tarierte Aluschale mit einem Durchmesser von 65 mm (neoLab-Aluschale, glatt, 65 mm, Art.-Nr. 2-1605, Gewicht ca. 2,5 g) eingelegt. Die Probe wird in der Schale über Nacht in einem Klima von 23 °C / 25% rF konditioniert und anschließend während 30 Minuten bei 150 °C und 1 mbar in einen Vakuumtrockenschrank (Heraeus, Modell VTR 5022) belassen. Vor dem Zurückwiegen wird die Schale erneut über Nacht bei 23 °C / 25% rF konditioniert. Die festgestellte Gewichtsabnahme bezogen auf die Originaleinwaage der Folie in Prozent wird als Weichmacherabgabe definiert.

Erweichungstemperatur Tg

Die Bestimmung der Erweichungstemperatur Tg des teilacetalisierten Polyvinylalkohols erfolgt mittels Dynamischer Differenzkalorimetrie (DSC) gemäß DIN 53765 unter Verwendung einer Heizrate von 10K/min im Temperaturintervall -50 °C -150°C. Es wird eine erste Heizrampe, gefolgt von einer Kühlrampe, gefolgt von einer zweiten Heizrampe gefahren. Die Lage der Glasübergangstemperatur wird an der der zweiten Heizrampe zugehörigen Messkurve nach DIN 51007 ermittelt. Der DIN-Mittelpunkt (Tg DIN) ist definiert als Schnittpunkt einer Horizontalen auf halber Stufenhöhe mit der Messkurve. Die Stufenhöhe ist durch den vertikalen Abstand der beiden Schnittpunkte der Mitteltangente mit den Basislinien der Messkurve vor und nach Glasumwandlung definiert.

Wasser- bzw. Feuchtegehalt

Der Wasser- bzw. Feuchtegehalt der Folien wird mit der Karl-Fischer-Methode bestimmt, nachdem die Folie bei 23 °C und 85% rF wenigstens 24h konditioniert wurde.

Kälteflexibilität

Die Kälteflexibilität der Folien wird auf einfache Weise durch manuellen Vergleich von DIN A4 großen Folienabschnitten bei einer Lagertemperatur von 5 °C bewertet.

Kältebruchtemperatur

Die Kältebruchtemperatur der Folie wird gemäß DIN EN 1876-2 (1998) bestimmt.

mechanische Zugfestigkeit

Die mechanische Zugfestigkeit der Folien wird gemäß EN ISO 527-3: 1995-10, Prüfgeschwindigkeit 50 mm/min ermittelt.

Fließverhalten

Die Bestimmung des Fließverhaltens der Folie erfolgt als Schmelzindex (Massenfluss: MFR) nach DIN EN ISO 1133 auf einem entsprechenden Gerät, z.B. der Firma Göttfert, Modell MI2. Der MFR-Wert wird bei 100°C mit der 2 mm Düse bei Gewichtsbelastung von 21,6 kg in Gramm pro 10 Minuten (g/10 min) angegeben.

Durchgangswiderstand

Elektrischer Durchgangswiderstand: Die Messung des spezifischen Durchgangswiderstandes der Folie erfolgt gemäß DIN IEC 60093 bei definierter Temperatur und Umgebungsfeuchte (23 °C und 85% rLF) nachdem die Folie wenigstens 24h bei diesen Bedingungen konditioniert wurde. Zur Durchführung der Messung wurde eine Plattenelektrode Typ 302 132 von der Firma Fetronic GmbH sowie ein Widerstandsmessgerät ISO-Digi 5kV von der Firma Amprobe verwendet. Die Prüfspannung betrug 2,5kV, die Wartezeit nach Anlegen der Prüfspannung bis zur Messwerterfassung 60 sek. Damit ein ausreichender Kontakt zwischen den flachen Platten der Messelektrode und der Folie gewährleistet ist, sollte deren Oberflächenrauhigkeit Rz bei Messung nach DIN EN ISO 4287 nicht größer als 10 mm sein, d.h. gegebenenfalls muss die Originaloberfläche der PVB-Folie vor der Widerstandsmessung durch thermisches Umprägen geglättet werden.

Kriechneigung

Die Kriechneigung der Folien wird an Testlaminaten bestimmt, welche aus zwei Stücken Floatglas der Dicke 3 mm und Katenabmessung 150 x 300 mm mit der in Dicke 0.76 mm dazwischen laminierten Folie so hergestellt werden, dass die beiden Gläser in der Länge einen Versatz von 2 cm zueinander aufweisen (siehe Fig. 1). Die auf ihre Kriechneigung zu untersuchende Folie wird vor dem Herstellen des Laminates in einem Klima von 23 °C / 23 % rF über Nacht konditioniert. Die beiden überstehenden Glasabschnitte sind nicht mit Folie bedeckt, d.h. die einlaminierte Zwischenschicht hat lediglich eine Länge von 28 cm. Die Testlaminate werden mit einem Stift von beiden Seiten genau gegenüberliegend mit Querstrichen markiert, anhand derer später der durch Abrutschen resultierende Versatz leicht ausgemessen werden kann. Die Testlaminate werden in einem Heizschrank bei 100 °C in der Vertikalen so aufgestellt bzw. befestigt, dass das vordere, nicht bodenberührende Glas unter seinem Eigengewicht frei abgleiten kann, dass heißt, nur durch die Zwischenschichtfolie gehalten wird und auch nur zu dieser Kontakt hat, so dass das Ergebnis nicht durch Reibungseffekte verfälscht wird. Die Testlaminate werden nach Ablauf einer Woche auf etwaigen Versatz hin untersucht indem der Abstand zwischen den beiden Markierungen mit einem Lineal ausgemessen wird.

Penetrationsfestigkeit

Die Penetrationsfestigkeit der mit den erfindungsgemäßen PVB-folien hergestellten Verbundsicherheitsgläser erfolgt gemäß ECE 43 mit der 2.26 kg Kugel, wobei die sichere Bruchhöhe, d.h. die Abwurfhöhe, bei welcher mindestens 80% der verwendeten Probegläser einer Serie noch nicht durchschlagen werden, ermittelt wird.

Schlagzugzähigkeit

Schlagzugzähigkeit: Die mechanische Festigkeit der PVB-Folie unter dynamischer Zugbeanspruchung wird gemäß EN ISO 8256 (1997; Verfahren A, Probekörper-Typ 5) als Schlagzugzähigkeit bei 23 °C ermittelt. Die erfindungsgemäßen Folien der Beispiele erfüllen die Anforderungen, die üblicherweise an PVB-Folie für Verbundsicherheitsglas gestellt werden, das sind im einzelnen: hohe Transparenz bzw. Abwesenheit von Trübung, geringe Eigenfarbe und hier insbesondere niedriger Gelbwert, ausreichende mechanische Festigkeit, geringer Eigengeruch, Möglichkeit der Haftungsreduktion bei Zugabe der üblichen Antihaftmittel, gute und gleichmäßige Klebewirkung zu Glas.

**Beispiele**

Mischungen aus Polyvinylbutyral und Weichmacher der in den nachfolgenden Tabellen angegebenen Zusammensetzungen wurden auf einer Extrusionsanlage aus einer Breitschlitzdüse zu einer Flachfolie in Stärke 0.76 mm extrudiert. Die Folien, deren Penetrationsfestigkeit per Kugelfallprüfung überprüft werden sollte, enthielten zur Haftungsreduktion eine Kombination von Kaliumacetat und Magnesiumacetat Tetrahydrat in einer Gesamtmenge im Bereich von 0,01 bis 0,03 Gew.%, durch die in einem Glas-/Glas-Laminat mit je 2 mm Floatglas (Planilux®) eine Pummelhaftung im Bereich 2 - 4 eingestellt wurde.

Die Tabellen 1 bis 3 zeigen das Folien mit einer erfindungsgemäßen Zusammensetzung gute mechanische und elektrische Eigenschaften bei einer gleichzeitig geringen Feuchteaufnahme besitzen.

Es bedeuten
DINA Düsonyladipat der BASF SE (Plastomoll DNA)
DINCH Di-isononyl-1,2-cyclohexan-carbonsäureester der
BASF SE (HEXAMOLL)

DINP Diisonylphthalat zb von BASF SE oder Oxeno
3G8 Triethylenglykol-bis-2-ethylhexanoat
Tg (PVB) Erweichungstemperatur PVB bezogen auf PVB
PVAc-Gehalt Polyvinylacetat-Gehalt PVB bezogen auf PVB
DEHT Di-(2-ethylhexyl)terephthalat
Stiffness Bestimmt nach ASTM D1388 bei 20°C
WM-Gehalt Gesamtweichmachergehalt bez. auf Folie
WMA Weichmacherausschwitzen bez. auf Folie
WMF Weichmacherflüchtigkeit bez. auf Folie
Durchgangswiderstand Elek. Durchgangswiderstand bei 23°C / 85% RF
Feuchteaufnahme Feuchteaufnahme bei 23°C / 85% RF
nach Karl-Fischer
Kriechneigung Kriechneigung bei 100°C in mm
Durchschlag Durchschlagfestigkeit einer Kugel 2260g
bei der angegebenen Temperatur
MFR Schmelzindex MFR 21,6 Kg/100 2
**Tabelle 1**

| | | VG 1 | VG 2 | VG 3 |
|---|---|---|---|---|
| PVB | Gew.-% | 74 | 74 | 74 |
| DINA | Gew.-% | 0 | 26 | 0 |
| DINCH | Gew.-% | - | - | |
| DINP | Gew.-% | - | - | |
| DEHT | Gew.-% | - | - | |
| 3G8 | Gew.-% | 26 | - | 26 |
| Dihexyladipat | Gew.-% | - | - | - |
| PVOH-Gehalt PVB | Gew.-% | 19,7 | 19,7 | 14,3 |
| PVAc-Gehalt PVB | Gew.-% | 0,8 | 0,8 | 0,9 |
| Tg PVB | °C | 75 | 75 | 68 |
| WM-Gehalt | Gew.-% | 26 | 26 | 26 |
| PRÜFUNGEN AN DER FOLIE | | | | |
| WMA 23 °C nach 30 d | | kein | stark | kein |
| WMA bei 5 °C | | kein | stark | kein |
| WMF | % | 4,2 | 6,5 | 3,9 |
| Reißdehnung | % | 252 | - | 300 |
| Reißfestigkeit | N/mm2 | 26 | - | 22,6 |
| | | VG 1 | VG 2 | VG 3 |
| Schlagzugzähigkeit | kJ/m2 | 1680 | - | 1917 |
| Kältebruchtemperatur | °C | -35 | - | -44 |
| Stiffness | mm | | - | - |
| MFR | g /10 min | 0,23 | - | |
| Durchgangswiderstand | ohm x cm | 4,05+E10 | - | 3,30E+11 |
| Feuchteaufnahme | Gew.-% | 2,43 | * | 1,75 |

(fortgesetzt)

| PRÜFUNGEN IM LAMINAT | | | | |
|---|---|---|---|---|
| Kriechneigung | mm | - | - | - |
| Durchschlag bei 0 °C | m | - | - | 5 |
| Durchschlag bei 23°C | m | - | - | 5,25 |
| Durchschlag bei 40 °C | m | - | - | 2,25 |

**Tabelle 2**

| | | BSP1 | BSP2 | BSP3 |
|---|---|---|---|---|
| PVB | Gew.-% | 70 | 72 | 72 |
| DINA | Gew.-% | 20 | 19 | 14 |
| DINCH | Gew.-% | - | - | - |
| DINP | Gew.-% | 10 | 9 | - |
| DEHT | Gew.-% | - | - | 14 |
| 3G8 | Gew.-% | - | - | - |
| Dihexyladipat | Gew.-% | | | |
| PVOH-Gehalt PVB | Gew.-% | 14,0 | 14,0 | 14,0 |
| PVAc-Gehalt PVB | Gew.-% | 0.9 | 0.9 | 0.9 |
| Tg PVB | °C | 68 | 68 | 68 |
| WM-Gehalt | Gew.-% | 30 | 28 | 28 |
| PRÜFUNGEN AN DER FOLIE | | | | |
| WMA 23 °C nach 30 d | | kein | kein | kein |
| WMA bei 5°C | | kein | kein | kein |
| WMF | % | 2,9 | 2,6 | 2,7 |
| Reißdehnung | % | 274 | 278 | 237 |
| Reißfestigkeit | N/mm2 | 23,6 | 22,4 | 28,8 |
| | | BSP1 | BSP2 | BSP3 |
| Schlagzugzähigkeit | kJ/m2 | 1818 | 1721 | 1364 |
| Kältebruchtemperatur | °C | -47 | -45 | -32 |
| Stiffness | mm | - | - | - |
| MFR | g /10 min | 0,28 | 0,25 | 0,21 |
| Durchgangswiderstad | ohm $\times$ cm | - | - | - |
| Feuchteaufnahme | Gew.-% | 1,41 | 1,43 | 1,41 |
| PRÜFUNGEN IM LAMINAT | | | | |
| Kriechneigung | mm | 1,5 | 0,5 | 0,5 |
| Durchschlag bei 0 °C | m | - | - | - |

(fortgesetzt)

| PRÜFUNGEN IM LAMINAT | | | | |
|---|---|---|---|---|
| Durchschlag bei 23°C | m | - | - | - |
| Durchschlagbei 40 °C | m | - | - | - |

**Tabelle 3**

| | | VG 5 | BSP4 | BSP5 |
|---|---|---|---|---|
| PVB | Gew.-% | 74 | 74 | 74 |
| DINA | Gew.-% | 0 | 6,5 | 13 |
| DINCH | Gew.-% | 26 | 19,5 | 13 |
| DINP | Gew.-% | | | |
| DEHT | Gew.-% | | | |
| 3G8 | Gew.-% | | | |
| Dihexyladipat | Gew.-% | --- | --- | --- |
| PVOH-Gehalt PVB | Gew.-% | 14,7 | 14,7 | 14,7 |
| PVAc-Gehalt PVB | Gew.-% | 0,8 | 0,8 | 0,8 |
| Tg PVB | °C | 70 | 70 | 70 |
| WM-Gehalt | Gew.-% | 26 | 26 | 26 |
| PRÜFUNGEN AN DER FOLIE | | | | |
| WMA 23°C/ 30 d | | kein | kein | kein |
| WMA bei 5 °C | | kein | kein | kein |
| WMF | % | 2,5 | 2,8 | 1,5 |
| Reißdehnung | % | 245 | 248 | 258 |
| Reißfestigkeit | N/mm2 | 28,5 | 27,9 | 26,4 |
| | | VG 5 | BSP4 | BSP5 |
| Schlagzugzähigkeit | kJ/m2 | 1458 | 1530 | 1592 |
| Kältebruchtemp. | °C | -24 | -33 | -36 |
| Stiffness | mm | 88 | 71 | 63 |
| MFR | g /10 min | 0,14 | 0,17 | 0,19 |
| Durchgangswiders. | ohm x cm | 1,50E+13 | 8,80E+12 | 4,70E+12 |
| Feuchteaufnahme | Gew.-% | 1,42 | 1,43 | 1,44 |
| PRÜFUNGEN IM LAMINAT | | | | |
| Kriechneigung | mm | 0 | 0 | 0 |
| Durchschlag 0°C | m | 2 | 4 | 5,25 |
| Durchschlag 23°C | m | 4,25 | 4,75 | 6,25 |
| Durchschlag 40 °C | m | 3,25 | 3,75 | 3,25 |

**Tabelle 4**

| | | BSP6 | BSP7 |
|---|---|---|---|
| PVB | Gew.-% | 74 | 74 |
| DINA | Gew.-% | 19,5 | 26 |
| DINCH | Gew.-% | 6,5 | |
| DINP | Gew.-% | | |
| DEHT | Gew.-% | | |
| 3G8 | Gew.-% | | |
| Dihexyladipat | Gew.-% | --- | --- |
| PVOH-Gehalt PVB | Gew.-% | 14,7 | 14,7 |
| PVAc-Gehalt PVB | Gew.-% | 0,8 | 0,8 |
| Tg PVB | °C | 70 | 70 |
| WM-Gehalt | Gew.-% | 26 | 26 |
| PRÜFUNGEN AN DER FOLIE | | | |
| WMA 23 °C nach 30 d | | kein | kein |
| WMA bei 5 °C | | kein | kein |
| WMF | % | 1,5 | 1,4 |
| Reißdehnung | % | 264 | 279 |
| Reißfestigkeit | N/mm2 | 25,15 | 25,35 |
| | | BSP6 | BSP7 |
| Schlagzugzähigkeit | kJ/m2 | 1685 | 1737 |
| Kältebruchtemperatur | °C | -42 | -43 |
| Stiffness | mm | 58 | 52 |
| MFR | g /10 min | 0,21 | 0,24 |
| Durchgangswiderstand | ohm x cm | 2,9E+12 | 2,0E+12 |
| Feuchteaufnahme | Gew.-% | 1,46 | 1,47 |
| PRÜFUNGEN IM LAMINAT | | | |
| Kriechneigungbei 100°C | mm | 0 | 0 |
| Durchschlag bei 0 °C | m | 4,75 | 5,75 |
| Durchschlag bei 23°C | m | 5,25 | 5 |
| Durchschlag bei 40 °C | m | 2,75 | 2,25 |

**Tabelle 5**

| | | VG 6 | BSP8 |
|---|---|---|---|
| PVB | Gew.-% | 74 | 28 |
| DINA | Gew.-% | 0 | 14 |
| DINCH | Gew.-% | 26 | - |
| DINP | Gew.-% | | - |
| DEHT | Gew.-% | | - |

(fortgesetzt)

| | | VG 6 | BSP8 |
|---|---|---|---|
| 3G8 | Gew.-% | | - |
| Dihexyladipat | Gew.-% | | 14 |
| PVOH-Gehalt PVB | Gew.-% | 14,3 | 14,3 |
| PVAc-Gehalt PVB | Gew.-% | 0,9 | 0,9 |
| Tg PVB | °C | 68 | 68 |
| WM-Gehalt | Gew.-% | 26 | 28 |
| PRÜFUNGEN AN DER FOLIE | | | |
| WMA 23 °C nach 30 d | | kein | kein |
| WMA bei 5 °C | | kein | kein |
| WMF | % | 2,7 | 10,3 |
| Reißdehnung | % | 241 | - |
| | | VG 6 | BSP8 |
| Reißfestigkeit | N/mm2 | 27,7 | - |
| Schlagzugzähigkeit | kJ/m2 | 1475 | - |
| Kältebruchtemperatur | °C | -23 | - |
| Stiffness | mm | - | - |
| MFR | g /10 min | 0,38 | - |
| Durchgangswiderstand | ohm x cm | 1,2E+13 | - |
| Feuchteaufnahme | Gew.-% | 1,39 | 1,54 |
| PRÜFUNGEN IM LAMINAT | | | |
| Kriechneigung bei 100°C | mm | 6 | - |
| Durchschlag bei 0 °C | m | 1,75 | - |
| Durchschlag 23°C | m | 4,75 | - |
| Durchschlag bei 40 °C | m | 3,75 | - |

**Patentansprüche**

1. Weichmacherhaltige Folie enthaltend 60 bis 90 % Polyvinylacetal mit einem Polyvinylalkoholanteil von 12 bis 18 Gew.% und 2 bis 40 Gew.% einer oder mehrerer Adipatdialkylester der allgemeinen Formel $R_1CO_2(CH_2)_4CO_2R_2$, wobei $R_1$ und $R_2$ jeweils für einen gleichen oder unterschiedlichen Alkylrest mit 9 - 23 Kohlenstoffatomen stehen, als ersten Weichmacher und zusätzlich 1 bis 40 Gew.% mindestens eines weiteren Weichmacher, **dadurch gekennzeichnet, dass** als weiterer Weichmacher kernhydrierte Alkylphthalate und/oder kernhydrierte Alkylterephthalate im Massenverhältnis 10:90 bis 90:10 zum ersten Weichmacher verwendet werden.

2. Weichmacherhaltige Folie nach Anspruch 1, **dadurch gekennzeichnet, dass** die Folie als weiteren Weichmacher mindestens eine Verbindung mit einer gemäß der Formel 100 x (Anzahl O-Atome)/(Anzahl C-Atome + Anzahl H-Atome) berechneten Polarität von kleiner/gleich 9,4 enthält.

3. Weichmacherhaltige Folie nach einem der Ansprüche 1 oder 2, **dadurch gekennzeichnet, dass** das Polyvinylacetal eine Erweichungstemperatur Tg von kleiner/gleich 74 °C aufweist.

4. Weichmacherhaltige Folie nach einem der Ansprüche 1 bis 3, **dadurch gekennzeichnet, dass** der Rest-Acetatgehalt des Polyvinylacetals weniger als 5 Gew. % beträgt.

5. Weichmacherhaltige Folie nach einem der Ansprüche 1 bis 4, **dadurch gekennzeichnet, dass** als Adipatdialkylester Di-isononyladipat eingesetzt wird.

6. Weichmacherhaltige Folie nach einem der Ansprüche 1 bis 5, **dadurch gekennzeichnet, dass** die Folie eine Weichmacherabgabe von weniger als 4 Gew.% aufweist.

7. Weichmacherhaltige Folie nach einem der Ansprüche 1 bis 6, **dadurch gekennzeichnet, dass** die Folie einen Schmelzindex MFR 100 (10 min/21,6 kg) von kleiner als 350 mg/10 min aufweist.

8. Weichmacherhaltige Folie nach einem der Ansprüche 1 bis 7, **dadurch gekennzeichnet, dass** die Folie eine Kältebruchtemperatur von weniger als - 25 °C aufweist.

9. Weichmacherhaltige Folie nach einem der Ansprüche 1 bis 8, **dadurch gekennzeichnet, dass** die Folie eine Schlagzugzähigkeit von 1300 - 2200 kJ/m$^2$ aufweist.

10. Weichmacherhaltige Folie nach einem der Ansprüche 1 bis 9, **dadurch gekennzeichnet, dass** als Polyvinylacetal Polyvinylbutyral eingesetzt wird.

11. Verwendung der weichmacherhaltigen Folie nach einem der Ansprüche 1 bis 10 zur Herstellung von Verbundverglasungen, Windschutzscheiben oder Photovoltaikmodulen.

**Claims**

1. A plasticised sheet containing 60 to 90 % polyvinyl acetal having a polyvinyl alcohol proportion of 12 to 18 % by weight and 2 to 40 % by weight of one or more adipate dialkyl esters of general formula $R_1CO_2(CH_2)_4CO_2R_2$, where $R_1$ and $R_2$ each stand for a same or different alkyl group with 9-23 carbon atoms, as a first plasticiser and additionally containing 1 to 40 % by weight of at least one further plasticiser, **characterised in that** core-hydrogenated alkyl phthalates and/or core-hydrogenated alkyl terephthalates in a mass ratio of 10:90 to 90:10 to the first plasticiser are used as further plasticiser(s).

2. The plasticised sheet according to Claim 1, **characterised in that** the sheet contains as further plasticiser at least one compound having a polarity of less than/equal to 9.4, calculated in accordance with the formula 100 x (number of O atoms)/(number of C atoms + number of H atoms).

3. The plasticised sheet according to one of claims 1 or 2, **characterised in that** the polyvinyl acetate has a softening point Tg of less than/equal to 74°C.

4. The plasticised sheet according to one of claims 1 to 3, **characterised in that** the residual acetate content of the polyvinyl acetal is less than 5 % by weight.

5. The plasticised sheet according to one of claims 1 to 4, **characterised in that** diisononyl adipate is used as adipate dialkyl ester.

6. The plasticised sheet according to one of Claims 1 to 5, **characterised in that** the film has a plasticiser discharge of less than 4 % by weight.

7. The plasticised sheet according to one of Claims 1 to 6, **characterised in that** the sheet has a melt flow index MFR 100 (10 min/21.6 kg) of less than 350 mg/10 min.

8. The plasticised sheet according to one of Claims 1 to 7, **characterised in that** the sheet has a cold break temperature of less than -25 °C.

9. The plasticised sheet according to one of Claims 1 to 8, **characterised in that** the sheet has a tensile impact strength of 1300-2200 kJ/m$^2$.

10. The plasticised sheet according to one of Claims 1 to 9, **characterised in that** polyvinyl butyral is used as polyvinyl acetal.

11. Use of the plasticised sheet according to one of Claims 1 to 10 for the production of laminated glazings, windscreens or photovoltaic modules.

**Revendications**

1. Feuille contenant des plastifiants et contenant 60 à 90 % d'acétal de polyvinyle ayant une proportion d'alcool polyvinylique comprise entre 12 et 18 % en poids et 2 à 40 % en poids d'un ou de plusieurs esters adipiques de dialkyle répondant à la formule générale $R_1CO_2(CH_2)_4CO_2R_2$, dans laquelle $R_1$ et $R_2$ représentent chacun un radical alkyle identique ou différent renfermant 9 à 23 atomes de carbone, en tant que premier plastifiant et, en outre, 1 à 40 % en poids d'au moins un autre plastifiant, **caractérisée en ce que** l'on utilise en tant qu'autre plastifiant des phtalates d'alkyle à noyau hydrogéné et/ou des téréphtalates d'alkyle à noyau hydrogéné, le rapport massique avec le premier plastifiant étant compris entre 10 : 90 et 90 : 10.

2. Feuille contenant des plastifiants selon la revendication 1, **caractérisée en ce que** ladite feuille contient, en tant qu'autre plastifiant, un composé dont la polarité est inférieure ou égale à 9,4 lorsqu'elle est calculée selon la formule 100 x (nombre d'atome de O) / (nombre atomes de C + nombre d'atomes de H).

3. Feuille contenant des plastifiants selon l'une des revendications 1 ou 2, **caractérisée en ce que** ledit acétal de polyvinyle présente une température de ramollissement Tg inférieure ou égale à 74 °C.

4. Feuille contenant des plastifiants selon l'une des revendications 1 à 3, **caractérisée en ce que** ledit acétal de polyvinyle présente une teneur résiduelle en acétate inférieure à 5 %.

5. Feuille contenant des plastifiants selon l'une des revendications 1 à 4, **caractérisée en ce que** l'on met en oeuvre, en tant qu'ester adipique de dialkyle, de l'adipate de di-isononyle.

6. Feuille contenant des plastifiants selon l'une des revendications 1 à 5, **caractérisée en ce que** ladite feuille présente un taux de libération des plastifiants inférieur à 4 % en poids.

7. Feuille contenant des plastifiants selon l'une des revendications 1 à 6, **caractérisée en ce que** ladite feuille présente un indice de fluidité MFR 100 (10 min / 21,6 kg) inférieur à 350 mg /10 min.

8. Feuille contenant des plastifiants selon l'une des revendications 1 à 7, **caractérisée en ce que** ladite feuille présente une température de fragilité à froid inférieure à -25 °C.

9. Feuille contenant des plastifiants selon l'une des revendications 1 à 8, **caractérisée en ce que** ladite feuille présente résistance à la traction par choc comprise entre 1300 et 2200 kJ/m$^2$.

10. Feuille contenant des plastifiants selon l'une des revendications 1 à 9, **caractérisée en ce que** l'on met en oeuvre, en tant qu'acétal de polyvinyle, du polyvinyle de butyral.

11. Utilisation de la feuille contenant des plastifiants selon l'une des revendications 1 à 10 pour fabriquer des vitrages feuilletés, des pare-brise ou des modules photovoltaïques.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0877665 B1
- DE 10116812 A1
- US 5013779 A
- DE 10108315
- DE 10337701
- WO 02077081 A
- EP 0938519 A
- EP 1084188 A
- DE 102004000023
- DE 102004060042
- EP 1618145 A

- US 3841890 A
- WO 02102591 A
- EP 1527107 B1
- WO 2004063231 A1
- EP 1606325 A1
- WO 03020776 A1
- EP 185863 B1
- EP 1118258 B1
- WO 02102591 A1
- EP 387148 B1

**In der Beschreibung aufgeführte Nicht-Patentliteratur**

- Plastics Additives Handbook. Hanser Verlag